Europäisches Patentamt

European Patent Office

Office européen des brevets

(11) Veröffentlichungsnummer: **0 193 784**

**A2**

# (12) EUROPÄISCHE PATENTANMELDUNG

(21) Anmeldenummer: **86102088.1**

(22) Anmeldetag: **18.02.86**

(51) Int. Cl.⁴: **H01R 13/53**

(30) Priorität: **04.03.85 DE 3507589**

(43) Veröffentlichungstag der Anmeldung:
**10.09.86 Patentblatt 86/37**

(84) Benannte Vertragsstaaten:
**DE FR GB IT SE**

(71) Anmelder: **Siemens Aktiengesellschaft Berlin und München**
**Wittelsbacherplatz 2**
**D-8000 München 2(DE)**

(72) Erfinder: **Waligora, Hans-Joachim**
**Schweidnitzer Weg 15**
**D-8520 Erlangen(DE)**
Erfinder: **Besendörfer, Klaus, Dipl.-Ing. (FH)**
**Billrothstrasse 2**
**D-8500 Nürnberg(DE)**
Erfinder: **Breunig, Peter, Dipl.-Ing. (FH)**
**Rosenstrasse 10**
**D-8501 Veitsbronn(DE)**

(54) **Anschlussvorrichtung für eine Hochspannungsmaschine.**

(57) Zum steckbaren Anschluß von geschirmten Starkstromkabeln an eine Hochspannungsmaschine ist eine Anschlußplatte (3) vorgesehen, die auf eine Öffnung (2) des Maschinengehäuses (1) aufgesetzt wird und die mit drei Gießharzdurchführungen (5, 6, 7) bestückt ist. Der maschinenseitige Kontaktkörper (9) jeder Gießharzdurchführung (6) befindet sich innerhalb des Gießharzkörpers. Dabei wird der Kontaktkörper (9) mit der kabelseitig vorgesehenen Steckbuchse (8) mittels einer vorderseitig axial in der Steckbuchse eingeführte Befestigungsschraube (10) verbunden. Die Gießharzdurchführungen (6) liegen mit quadratischen Befestigungsflanschen (6D) maschinenseitig an der Anschlußplatte (3) an.

FIG 1

EP 0 193 784 A2

## Anschlußvorrichtung für eine Hochspannungsmaschine

Die Erfindung betrifft eine Anschlußvorrichtung für eine Hochspannungsmaschine nach dem Oberbegriff des Anspruches 1, die zum Anschluß geschirmter Starkstromkabel durch daran befestigte Kabelstecker maschinengehäusefest angeordnete und mit Wicklungsanschlüssen verbundene Gießharzdurchführungen aufweist.

Bei einer aus der Zeitschrift "Elektrizitätswirtschaft", Jahrgang '83 (1984), Heft 2, insb. Seite 58, Bild 3 sowie der Zeitschrift "Elektrodienst" 25, 1983, Heft 1, Seiten 14/15 bekannten Anschlußvorrichtung dieser Art sind an einer metallenen Anschlußplatte im Dreieck angeordnete Gießharzdurchführungen mit angeformten runden Befestigungsflanschen lösbar befestigt, in deren steckerseitige konische Enden jeweils eine Steckbuchse für die Steckstifte der Kabelstecker eingebettet ist. Aus den maschinenseitigen Enden der Gießharzdurchführungen ragen jeweils mit den Steckbuchsen verbundene Anschlußbolzen heraus, an denen mit den Wicklungsanschlüssen verbundene Kabelschuhe kontaktgebend angeschraubt sind. Die Gießharzdurchführungen sind dabei mit ihren Befestigungsflanschen von der Kabelseite her auf die Außenseite der Anschlußplatte aufgesetzt und zwischen der Anschlußplatte und dem Maschinengehäuse ist ein abstandsvergrößernder gesonderter Stutzen angeordnet, um die erforderlichen isolierenden Luftabstände der nichtisolierten Verbindungsstellen gegeneinander und gegen benachbarte Maschinenteile sicherzustellen. Außerdem sind wegen der Stutzen Maßnahmen zur Abschirmung der Gießharzdurchführungen im Bereich zwischen Kabelstecker und Anschlußplatte notwendig. Da die Verbindung der Kabelschuhe mit den Anschlußbolzen der Gießharzdurchführungen erst nach dem Anbringen der bestückten Anschlußplatte samt Stutzen am Maschinengehäuse erfolgen kann, ist im Stutzen eine verschließbare Bedienungsöffnung vorgesehen, die den Aufwand für die Anschlußvorrichtung noch vergrößert, wobei das Anschließen bzw. Lösen der Kabelschuhe an den Anschlußbolzen zeitraubend und umständlich ist.

Der Erfindung liegt die Aufgabe zugrunde, eine Anschlußvorrichtung der eingangs genannten Art zu schaffen, die einfacher aufgebaut ist, ohne Abschirmungsmaßnahmen auskommt und bei verringertem Raumbedarf eine wesentlich erleichterte Montage am Maschinengehäuse ermöglicht.

Die Lösung dieser Aufgabe gelingt durch die kennzeichnenden Merkmale des Anspruches 1.

Vorteilhafte Ausgestaltungen der Erfindung sind Gegenstand weitere Ansprüche.

Durch die Versenkung der Verbindungen der Wicklungsanschlüsse mit ihren Kontaktkörpern in die maschinenseitigen Enden der Isolierkörper der Gießharzdurchführungen können diese Enden näher an oder in das Maschinengehäuse verlegt und die Gießharzdurchführungen enger zueinander auf der maschinenseitigen Fläche der Anschlußplatte mit ihren Befestigungsflanschen angeordnet werden, wobei statt eines gesonderten, relativ hohen Stutzens eine wesentlich flachere Mulde genügt oder unter Umständen die Anschlußplatte völlig flach sein kann. Die Verwendung bei Stützisolatoren bekannter quadratischer Befestigungsflansche erlaubt eine noch engere Anordnung auf kleinstmöglicher Fläche, da bei gleichen Lochabständen in den Befestigungsflanschen die Kantenlänge bei quadratischen Befestigungsflanschen kleiner als der Durchmesser runder Befestigungsflansche ist. Die auf der Platteninnenseite angeordneten Gießharzdurchführungen stehen mit ihren steckerseitigen Enden auch weniger weit von Maschinengehäuse ab und ermöglichen durch die an ihren außen konischen Enden als Paßsitze für die Kabelstecker eine Abdeckung des Zwischenraumes zwischen den Enden und den zugeordneten Durchstecköffnungen in der Anschlußplatte. Die Anbringung der einteiligen Anschlußplatte am Klemmenkastenflansch des Maschinengehäuses macht außerdem zusätzlich gesonderte Abschirmungen für die Gießharzdurchführungen überflüssig.

In der Zeichnung sind Ausführungsbeispiele der Erfindung für eine dreiphasige Anschlußvorrichtung dargestellt und nachfolgend näher bezeichnet. Es zeigen:

Fig. 1 eine mit drei Gießharzdurchführungen bestückte Anschlußvorrichtung in Draufsicht

Fig. 2 einen Schnitt nach der Linie II-II des Gegenstandes der Fig. 1

Fig. 3 eine Gießharzdurchführung im Längsschnitt

Fig. 4 eine abgewandelte unbestückte Anschlußplatte in Draufsicht

Fig. 5 einen Schnitt nach der Linie V-V des Gegenstandes in Fig. 4

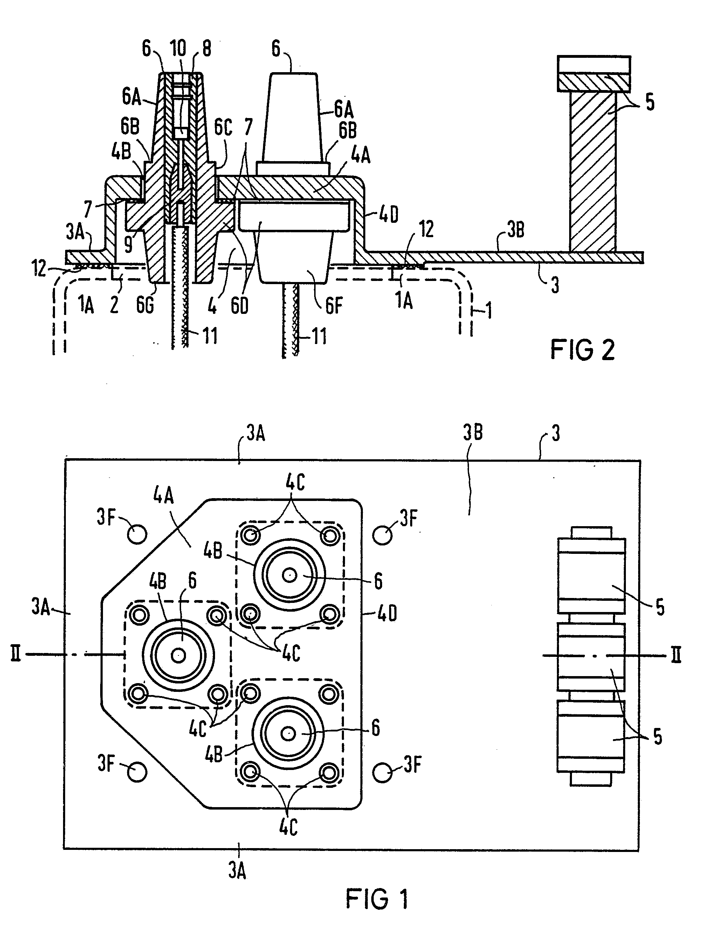

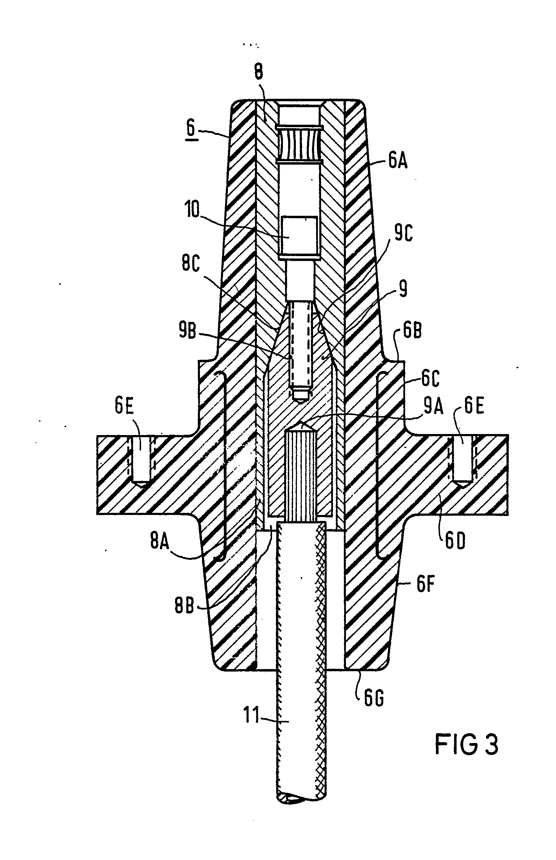

Gemäß den Fig. 1 und 2 ist eine einteilige Anschlußplatte 3 mit einer Mulde 4 versehen, die an drei Seiten von einem Plattenrand 3A und an der vierten Seite von einem in der gleichen Ebene liegenden Flächenteil 3B umgeben ist. Der ebene Mittelteil 4A der Mulde 4 weist drei Durchstecköffnungen 4B für Gießharzdurchführungen 6 auf, die an den Ecken eines gedachten gleichseitigen Dreiecks zentrisch angeordnet sind. Jeder Durchstecköffnung 4B sind vier an den Ecken eines gedachten Quadrates angeordnete Schraubendurchlässe 4C zugeordnet, durch die von der Kabelseite (Oberseite) hier nicht dargestellte Befestigungsschrauben für die Gießharzdurchführungen 6 in Gewindesacklöcher 6E der quadratischen Befestigungsflansche 6D (Fig. 3) eingeschraubt werden können, so daß die Befestigungsflansche 6D in der Mulde versenkt an der ebenen Innenseite des Mittelteils 4A über Befestigungsflanschdichtungen 7 anliegend gehalten sind, wobei die Seitenflächen der quadratischen Befestigungsflansche aller Gießharzdurchführungen 6 zueinander parallel in geringstmöglichem Abstand voneinander und vom Muldenrand 4D liegen. Um die Mulde 4 sind vier Befestigungslöcher 3F im Plattenrand 3A und im Flächenteil 3B verteilt angeordnet, durch die nicht dargestellte Befestigungsschrauben ragen, die in Gewindelöcher im Klemmenkastenflansch 1A des gestrichelt angedeuteten Maschinengehäuses 1 unter Zwischenlage einer Flanschdichtung 12 einschraubbar sind. Die Kontur der Mulde 4 ist an die Form der vom Klemmenkastenflansch 1A umgebenen Anschlußöffnung 2 im Maschinengehäuse angepaßt. Im vorliegenden Fall hat sie die Form eines Quadrates mit zwei abgeschrägten Randseiten. Innerhalb dieser Kontur sind die Gießharzdurchführungen 6 in besagter Weise eng benachbart angeordnet.

Am freien Ende des flachen Flächenteils 3B sind angedeudete Kabelbefestigungsmittel 5 befestigt, deren Höhe über das steckerseitige Ende 6A der Gießharzdurchführungen hinausreicht. Auf die steckerseitigen konischen Enden 6A der Gießharzdurchführungen sind nicht dargestellte Kabelstecker in Winkelform aufgesteckt und liegen dabei an der Ringschulter 6B an. Dadurch werden die Zwischenräume zwischen den Durchstecköffnungen 4B und den zylindrischen Zwischenabschnitten 6C der Gießharzdurchführungen 6 von den Kabelsteckern abgedeckt. Die vom Maschineninnern herausgeführten isolierten Wicklungsanschlüsse 11 sind mit zylinderförmigen Kontaktkörpern 9 fest leitend verbunden und von der offenen Stirnseite 6G im maschinenseitigen Ende 6F jeder Gießharzdurchführung 6 versenkt in die jeweilige Steckbuchse 8 eingefügt und mit dieser durch eine von der Steckerseite her betätigbare Befestigungsschraube 10 kontaktgebend verbunden. Die Stirnseiten 6G liegen dabei außerhalb der Mulde 4.

In Fig. 3 ist eine erfindungsgemäße Gießharzdurchführung 6 mit angedeuteter Potentialsteuerung vergrößert im Längsschnitt mit eingefügtem Wicklungsanschluß 11 gezeigt. Der einteilige Gießharzkörper mit angeformtem quadratischen Befestigungsflansch 6D, in dem die vier Gewindesacklöcher 6E vorgesehen sind, weist ein konisches steckerseitiges Ende 6A und ein ebenfalls konisches maschinenseitiges Ende 6F auf. Das Ende 6A geht durch eine Ringschulter 6B in einen zylindrischen Zwischenabschnitt 6C über, zwischen dem und dem Ende 6F sich der Befestigunsflansch 6D befindet. Die Höhe des Zwischenabschnitts 6C ist so gewählt, daß die Ringschulter 6B über den Mittelteil 4A der Mulde 4 herausragt.

Der Gießharzkörper enthält im Bereich vom Ende 6A bis zum Befestigungsflansch 6D in seinem zentrischen Durchlaß eine Steckbuchse 8. Die Steckbuchse 8 mit Kontaktlamellen für den Steckstift des Kabelsteckers hat an ihrem maschinenseiten Ende 8A einen zylinderförmigen Aufnahmeraum 8B mit einer stirnseitig konischen Gegenkontaktfläche 8C, die einen Schraubendurchlaß umgibt.

· Der Aufnahmeraum 8B hat endseitig einen ausreichenden axialen Abstand von der offenen Stirnseite 6G und nimmt den zylinderförmigen Kontaktkörper 9 mit konischer Kontaktfläche 9C vollständig auf, wobei der Kontaktkörper 9 mit seinem zylinderförmigen Teil einen radialen Abstand zum zylinderförmigen Teil des Aufnahmeraumes 8B hat. Die Kontaktfläche 9C umgibt ein Schraubgewinde 9B für die Befestigungsschraube 10, die sich mit ihrem Schraubenkopf in den oberen· Teil der Kontaktbuchse abstützt. Der Kontaktkörper 9 hat einen stirnseitig offenen Hohlraum 9A für die Befestigungen des blanken Endes des Wicklungsanschlusses 11, wobei die Isolierung des Wicklungsanschlusses innerhalb des Hohlraumes 8B liegt.

Durch die versenkte Lage des Kontaktkörpers 9 können die erforderlichen Isolierabstände in Luft bei kleinstmöglichen Abständen der Gießharzdurchführungen voneinander und den Maschinengehäusen eingehalten werden, so daß die Anordnung der Befestigungsflansche an der Innenseite der Anschlußplatte möglich ist. Diese Anordnung mindert den äußeren Platzbedarf für die Anschlußplatte zusätzlich. Da das Lösen der Befestigungsschrauben 10 von außen her durch die Steckbuchse der montierten Gießharzdurchführungen leicht möglich ist, wird der Montageaufwand erheblich verringert.

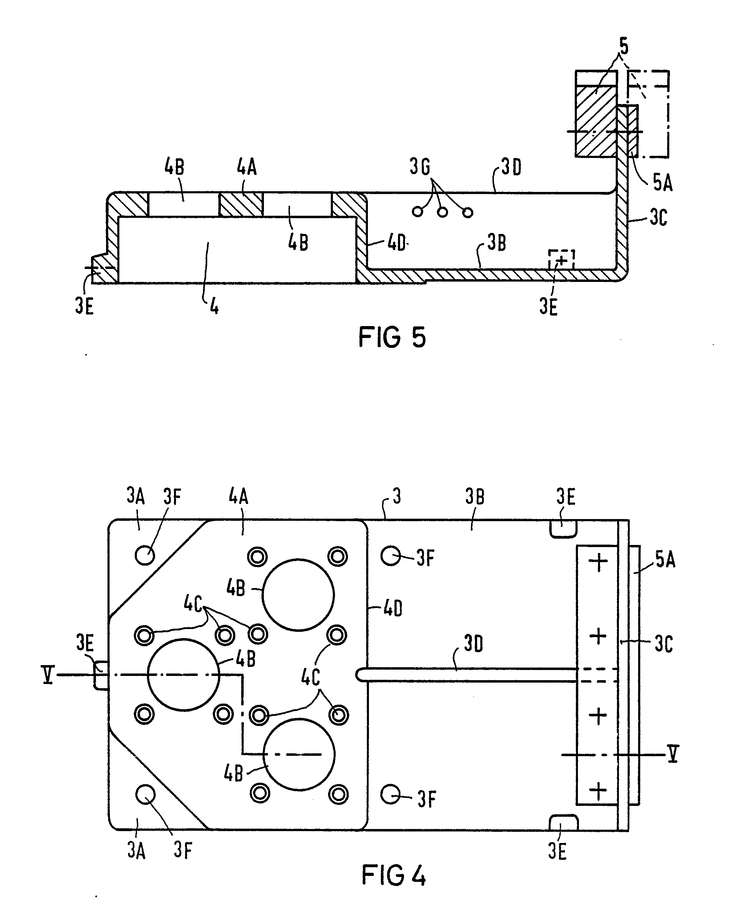

Eine besonders kompakte steife Anschlußplatte 3 mit Mulde aus korrosionsfestem Aluminiumguß ist in den Fig. 4 und 5 gezeigt, die in ihrer Breite auf die Breite der Mulde 4 reduziert ist und nur an den abgeschrägten Muldenseiten angrenzende dreieckförmige Randteile 3A sowie einen mit einer abgewinkelten Haltefläche 3C versehenen Flächenteil 3B und eine an den Muldenrand 4D, den Flächenteil 3B sowie die Haltefläche 3C angeformte Versteifungsrippe 3D aufweist, über die die Haltefläche 3C vorragt. Am überstehenden Abschnitt der Haltefläche können die Kabelbefestigungsmittel 5 zusammen mit einer Verstärkungsleiste 5A wahlweise an der einen oder anderen Seite befestigt werden, so daß eine Anpassung an verschiedene Längen der Kabelwinkelstecker leicht möglich ist. An dem freien Muldenrand 4D und an zwei Seitenflächen des Flächenteils 3B sind Befestigungsaugen 3E angeformt, an denen eine nicht dargestellte Abdeckhaube lösbar befestigt werden kann.

Die Versteifungsrippe kann außerdem als Anschlußstelle für Erdungsleiter mitbenutzt sein und hierzu Anschlußbohrungen 3G aufweisen. Diese besonders steife Anschlußplatte hält die durch Kurzschlußströme bedingten einwirkenden dynamischen Kräfte sicher aus. Die Abdeckhaube ergibt einen sicheren Schutz für die empfindlichen Gießharzdurchführungen samt Kabelsteckern.

**Ansprüche**

1) Anschlußvorrichtung für eine Hochspannungsmaschine zur Steckverbindung mit geschirmten Starkstromkabeln, die eine an einem Klemmenkastenflansch befestigbare metallene, mit Gießharzdurchführungen sowie mit Haltemitteln für die Starkstromkabel bestückte Anschlußplatte aufweist und bei der die in die steckerseitigen konischen Enden der Gießharzdurchführungen eingebetteten Steckbuchsen für die Kabelstecker maschinenseitig an die mit den Wicklungsanschlüssen fest verbundenen Kontaktkörpern lösbar angeschlossen sind wobei die Gießharzdurchführungen mit ihren angeformten Befestigungsflanschen abdichtend an der Anschlußplatte gehalten sind und diese ihrerseits abdichtend am Klemmenkastenflansch des Maschinengehäuses befestigbar ist,

**dadurch gekennzeichnet,**

daß die Steckbuchse (8) jeder Gießharzdurchführung (6) am ihrem maschinenseitigen Ende (8A) einen Aufnahmeraum (8B) mit stirnseitiger Gegenkontaktfläche (8C) für einen in ihr versenkbaren Kontaktkörper (9) aufweist und einen ausreichenden axialen Abstand zur offenen Stirnseite (6G) des maschinenseitigen Endes (6F) der Gießharzdurchführung (6) hat, daß der Kontaktkörper (9) durch eine steckerseitig betätigbare Befestigungsschraube (10) mit der Steckbuchse (8) kontaktgebend verbindbar ist und daß die Gießharzdurchführungen (6) mit ihren Befestigungsflanschen (6D) an der maschinenseitigen Fläche der einteiligen Anschlußplatte (3) abdichtend anliegend befestigt sind.

2) Anschlußvorrichtung nach Anspruch 1,

**dadurch gekennzeichnet,**

daß der einen radialen Abstand zum Aufnahmeraum (8B) aufweisende zylinderförmige Kontaktkörper (9) einen stirnseitig offenen Hohlraum (9A) für das blanke Ende des isolierten Wicklungsanschlußes (11) und am anderen Ende eine das Schraubgewinde (9B) für die Befestigungsschraube (10) umgebende Kontaktfläche (9C) aufweist.

3) Anschlußvorrichtung nach Anspruch 2,

**dadurch gekennzeichnet,**

daß die Kontaktfläche (9C) als Kegelstumpf und die Gegenkontaktfläche (8C) entsprechend konisch ausgebildet ist.

4) Anschlußvorrichtung nach Anspruch 1,

**dadurch gekennzeichnet,**

daß die einteilige Anschlußplatte (3) eine die Befestigungsflansche (6D) der Gießharzdurchführungen (6) an ihrem ebenen Mittelteil (4A) aufnehmende Mulde (4) aufweist und an dem an der anderen Seite der Mulde angrenzenden Flächenteil (3B) die Kabelbefestigungsmittel (5) angeordnet sind.

5) Anschlußvorrichtung nach Anspruch 1 oder 4,

**dadurch gekennzeichnet,**

daß die Befestigungsflansche (6D) der Gießharzdurchführungen (6) quadratische Kontur haben, die an ihren überstehenden Eckflächen Gewindesacklöcher (6E) für Halteschrauben aufweisen und kantenparallel eng benachbart an der Anschlußplatte (3, 4A) angeordnet sind.

6) Anschlußvorrichtung nach einem der vorhergehenden Ansprüche 1, 4 oder 5,

**dadurch gekennzeichnet,**

daß die Längsachsen der Gießharzdurchführungen (6) an den Endpunkten eines gedachten gleichseitigen Dreiecks liegen.

7) Anschlußvorrichtung nach Anspruch 1 oder 4,

**dadurch gekennzeichnet,**

daß das steckerseitige konische Ende (6A) der Gießharzdurchführung (6) durch eine Ringschulter (6B) von einem zylindrischen Zwischenabschnitt (6C) abgesetzt ist, der an den Befestigungsflansch (6D) angrenzt und höher als die Wandstärke der Anschlußplatte oder des Mittelteils (4A) der Mulde (4) bemessen ist.

8) Anschlußvorrichtung nach Anspruch 1 und 4,

**dadurch gekennzeichnet,**

daß der an die Mulde (4) angrenzende Flächenteil (3B) am Ende in eine über die Muldenhöhe hinausragende abgewinkelte Haltefläche (3C) für die Kabelbefestigungsmittel (5) übergeht und mindestens eine Versteifungsrippe (3D) aufweist, die an die Haltefläche (3C), den Flächenteil (3B) sowie die Mulde (4) angeformt ist.

9) Anschlußvorrichtung nach Anspruch 7,

**dadurch gekennzeichnet,**

daß die Versteifungsrippe (3D) durchgehend mittig zu den genannten Flächen angeordnet ist und Anschlußmittel (3G) für Erdungsleiter aufweist.

10) Anschlußvorrichtung nach Anspruch 8 oder 9,

**dadurch gekennzeichnet,**

daß an der dem Flächenteil (3B) abgewandten Seitenwand der Mulde (4) sowie an zwei einander gegenüberliegenden Randseiten des Flächenteils (3B) Befestigungsaugen (3E) für eine die bestückte Anschlußplatte überdeckende Haube vorgesehen sind.

FIG 2

FIG 1

FIG 3

FIG 5

FIG 4